(19) Europäisches Patentamt
European Patent Office
Office européen des brevets

(11) **EP 4 418 391 A1**

(12) **EUROPEAN PATENT APPLICATION**

(43) Date of publication:
**21.08.2024 Bulletin 2024/34**

(21) Application number: **24154618.3**

(22) Date of filing: **30.01.2024**

(51) International Patent Classification (IPC):
**H01M 10/0525** (2010.01)  **H01M 50/46** (2021.01)
**H01M 50/474** (2021.01)  **H01M 50/491** (2021.01)
**H01M 50/497** (2021.01)

(52) Cooperative Patent Classification (CPC):
**H01M 10/0525; H01M 50/46; H01M 50/474;
H01M 50/491; H01M 50/497;** H01M 50/417

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023 JP 2023021506**

(71) Applicant: **TOYOTA JIDOSHA KABUSHIKI
KAISHA**
**Toyota-shi, Aichi-ken, 471-8571 (JP)**

(72) Inventor: **HORIKAWA, Daisuke**
**Toyota-shi, 471-8571 (JP)**

(74) Representative: **D Young & Co LLP**
**3 Noble Street**
**London EC2V 7BQ (GB)**

(54) **LITHIUM METAL NEGATIVE ELECTRODE SECONDARY BATTERY**

(57) A lithium metal negative electrode secondary battery (100) comprises a positive electrode (10), a separator (30), a negative electrode (20), and an electrolyte solution. The electrolyte solution includes Li ions. The separator (30) is interposed between the positive electrode (10) and the negative electrode (20). The separator (30) includes a porous base material (31) and a covering layer (32). The porous base material (31) has a first main face (31a) and a second main face (31b). The first main face (31a) faces the positive electrode (10). The second main face (31b) faces the negative electrode (20). The covering layer (32) covers the second main face (31b). The covering layer (32) includes a Li-ion conductor. The Li-ion conductor has a Li-ion conductivity from $10 \times 10^{-13}$ to $2.0 \times 10^{-9}$ S/cm.

FIG.12

EP 4 418 391 A1

**Description**

CROSS REFERENCE TO RELATED APPLICATIONS

This nonprovisional application is based on Japanese Patent Application No. 2023-021506 filed on February 15, 2023, with the Japan Patent Office, the entire contents of which are hereby incorporated by reference.

BACKGROUND OF THE DISCLOSURE

Field

The present disclosure relates to a lithium metal negative electrode secondary battery.

Description of the Background Art

International Patent Laying-Open No. WO 2021/131533 discloses a lithium metal negative electrode secondary battery.

SUMMARY OF THE DISCLOSURE

Generally, at a negative electrode of a lithium (Li) ion secondary battery, an insertion reaction takes place. The insertion reaction refers to a reaction of Li ions moving in and out of crystals of a host material (such as graphite, for example).

At a negative electrode of a Li metal negative electrode secondary battery, a dissolution/deposition reaction takes place. More specifically, during charging, Li metal becomes deposited from the electrolyte solution. During discharging, Li metal dissolves into the electrolyte solution. Due to the dissolution/deposition reaction, energy density is expected to be increased. However, there is still some room for improvement in cycle endurance of Li metal negative electrode secondary batteries.

An object of the present disclosure is to improve cycle endurance of Li metal negative electrode secondary batteries.

Hereinafter, the technical configuration and effects of the present disclosure will be described. It should be noted that the action mechanism according to the present specification includes presumption. The action mechanism does not limit the technical scope of the present disclosure.

1. A lithium metal negative electrode secondary battery comprises a positive electrode, a separator, a negative electrode, and an electrolyte solution. The electrolyte solution includes lithium ions. The separator is interposed between the positive electrode and the negative electrode. The separator includes a porous base material and a covering layer. The porous base material has a first main face and a second main face. The first main face faces the positive electrode. The second main face faces the negative electrode. The covering layer covers the second main face. The covering layer includes a lithium-ion conductor. The lithium-ion conductor has a lithium-ion conductivity from $1.0 \times 10^{-13}$ to $2.0 \times 10^{-9}$ S/cm.

Conventionally, in a Li metal negative electrode secondary battery, during charging, Li metal may become deposited non-uniformly in the in-plane direction of the negative electrode. "In-plane direction" refers to any direction that is orthogonal to the thickness direction. Due to repeated charge and discharge (repeated dissolution and deposition), non-uniformity of Li metal may be increased. As a result, capacity retention can degrade rapidly.

In the present disclosure, the separator includes a covering layer. The covering layer faces the negative electrode. The covering layer includes a Li-ion conductor. The Li-ion conductor according to the present disclosure has a Li-ion conductivity from $10 \times 10^{-13}$ to $2.0 \times 10^{-9}$ S/cm. A Li-ion conductivity equal to or less than $2.0 \times 10^{-9}$ S/cm is markedly low as compared to a typical value. For example, the Li-ion conductivity of an electrolyte solution may be about $10^{-2}$ S/cm. The Li-ion conductivity of a solid electrolyte used in an all-solid-state battery may be about $10^{-2}$ to $10^{-4}$ S/cm.

During charging, Li ions permeate through the covering layer to reach the negative electrode. As described above, the Li-ion conductor included in the covering layer has a markedly low ionic conductivity. Because of this, it is conceivable that Li-ion congestion occurs at the interface between the Li-ion conductor and the negative electrode (the place for deposition). Due to the Li-ion congestion, the Li-ion concentration in the electrolyte solution may rise locally. That is, a Li-ion rich layer may be formed. The Li-rich layer may have rectifying action. As Li ions move through the Li-ion rich layer to reach the negative electrode, non-uniformity in Li-ion supply in the in-plane direction may be reduced. As a result, Li metal is expected to be deposited uniformly. With the Li metal deposited uniformly during charging, cycle endurance is expected to be improved.

It should be noted that when the Li-ion conductivity of the Li-ion conductor is below $1.0 \times 10^{-13}$ S/cm, Li ions may become excessively congested and cause degradation of cycle endurance. Hence, the Li-ion conductivity of the Li-ion conductor is $1.0 \times 10^{-13}$ S/cm or more.

Referring to International Patent Laying-Open No. WO 2021/131533, a functional layer is stacked on the separator. The functional layer includes phosphate particles (more specifically, lithium phosphate). Lithium phosphate ($Li_3PO_4$) is a Li-ion conductor. However, usually, $Li_3PO_4$ may have a Li-ion conductivity of about $1.0 \times 10^{-7}$ S/cm. That is, the Li-ion conductivity in International Patent Laying-Open No. WO 2021/131533 may be at least 50 times the Li-ion conductivity according to the present disclosure. It is conceivable that the functional layer according to International Patent Laying-Open No. WO 2021/131533 does not have rectifying action. International Patent Laying-Open No. WO 2021/131533 recites that the functional layer may inhibit an increase of the battery temperature. The functional layer according to International Patent Laying-Open No. WO 2021/131533 is different from the covering layer according to the present disclosure.

In the present disclosure, the Li-ion conductivity of $Li_3PO_4$ may be adjusted to $2.0 \times 10^{-9}$ S/cm or less by subjecting $Li_3PO_4$ to, for example, a treatment that causes disturbance in the crystallinity of the particle surface.

2. The lithium metal negative electrode secondary battery according to "1" above may include the configuration described below, for example. The lithium-ion conductor includes a first component, a second component, and a third component.

The first component is Li.

The second component is at least one selected from the group consisting of Mg, Al, Ti, Zn, Zr, Nb, Mo, Ta, W, and a rare earth element.

The third component is at least one selected from the group consisting of B, N, O, Si, P, S, Ge, and a halogen.

3. The lithium metal negative electrode secondary battery according to "1" or "2" above may include the configuration described below, for example. The lithium-ion conductor has an average particle size from 300 to 1500 nm, for example.

With the average particle size of the Li-ion conductor being from 300 to 1500 nm (from 0.3 to 1.5 $\mu$m), cycle endurance is expected to be improved.

4. The lithium metal negative electrode secondary battery according to any one of" 1" to "3" above may include the configuration described below, for example. The covering layer has a thickness from 0.5 to 15 $\mu$m.

With the thickness of the covering layer being from 0.5 to 15 $\mu$m, cycle endurance is expected to be improved.

5. The lithium metal negative electrode secondary battery according to any one of "1" to "4" above may include the configuration described below, for example. The lithium-ion conductor includes lithium phosphate.

For example, the Li-ion conductivity of $Li_3PO_4$ may be adjusted to the range of $1.0 \times 10^{-13}$ to $2.0 \times 10^{-9}$ S/cm.

6. The lithium metal negative electrode secondary battery according to any one of" 1" to "5" above may be an anode-free battery, for example.

With the lithium metal negative electrode secondary battery being an anode-free battery, energy density is expected to be enhanced, for example.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating the method of measuring Li-ion conductivity.

Fig. 2 is a conceptual view illustrating a Li metal negative electrode secondary battery according to the present embodiment.

Fig. 3 is a conceptual view illustrating a Li-ion conductor according to the present embodiment.

Fig. 4 is a first configuration example.

Fig. 5 is a second configuration example.
Fig. 6 is a third configuration example.
Fig. 7 is Table 1 showing evaluation results.
Fig. 8 is Table 2 showing evaluation results.
Fig. 9 is Table 3 showing evaluation results.
Fig. 10 is Table 4 showing evaluation results.
Fig. 11 is Table 5 showing evaluation results.
Fig. 12 is a graph plotting the evaluation results of Fig. 7.
Fig. 13 is a graph plotting the evaluation results of Fig. 8.
Fig. 14 is a graph plotting the evaluation results of Fig. 9.

DESCRIPTION OF THE PREFERRED EMBODIMENTS

<Description of Terms>

A description will be provided for terms that are used in the present specification. Terms that are not described here may be described in the specification when the term is used.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a plurality of particles (a particle group)" and "a group of particles (powder)".

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". "Not less than" and "not more than" are represented by an inequality symbol with an equality symbol, e.g., "$\leq$". "More than" and "less than" are represented by an inequality symbol without an equality symbol, e.g., "<". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm5\%$, $\pm3\%$, $\pm1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. For example, the compound may be doped with a trace element. Some of Al and/or O may be replaced by another element.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring. A derivative of a polymer compound (a resin material) may also be called "a modified product".

"Copolymer" includes at least one selected from the group consisting of unspecified-type, statistical-type, random-type, alternating-type, periodic-type, block-type, and graft-type.

"SOC (state of charge)" refers to the percentage of the charged capacity of the battery at a particular point in time relative to the full charge capacity of the battery.

"Lithium metal negative electrode secondary battery" refers to a battery in which negative electrode reaction includes Li metal dissolution/deposition reaction. For example, Li metal dissolution/deposition reaction may be responsible for 1 to 100%, or 25 to 100%, or 50 to 100%, or 75 to 100% of the negative electrode capacity. The negative electrode capacity exhibits reversible capacity loss. For example, at an SOC from 1 to 100%, or from 1 to 75%, or from 1 to 50%, or from 1 to 25%, Li metal may be deposited on the negative electrode. At an SOC of 0% (at a fully discharged state), Li metal may be fully dissolved in the electrolyte solution. At an SOC of 0%, Li metal may partially remain at the negative electrode.

Usually, Li metal deposition in a lithium-ion secondary battery may cause irreversible capacity loss. For example, Li metal deposition in a lithium-ion secondary battery is an unintended reaction. For example, Li metal deposition in a lithium-ion secondary battery may occur under abnormal conditions, at the time of improper use, and/or the like.

In "an anode-free battery", no Li metal is present at the negative electrode before initial charging (after assembly and before first-time charging). An anode-free battery is assembled in a state where the negative electrode does not include Li metal (a negative electrode active material). At the time of initial charging, Li is supplied from the positive electrode to the negative electrode, and thereby, for the first time, Li metal becomes deposited on the negative electrode. In an anode-free battery, at a fully discharged state, Li metal may be fully dissolved.

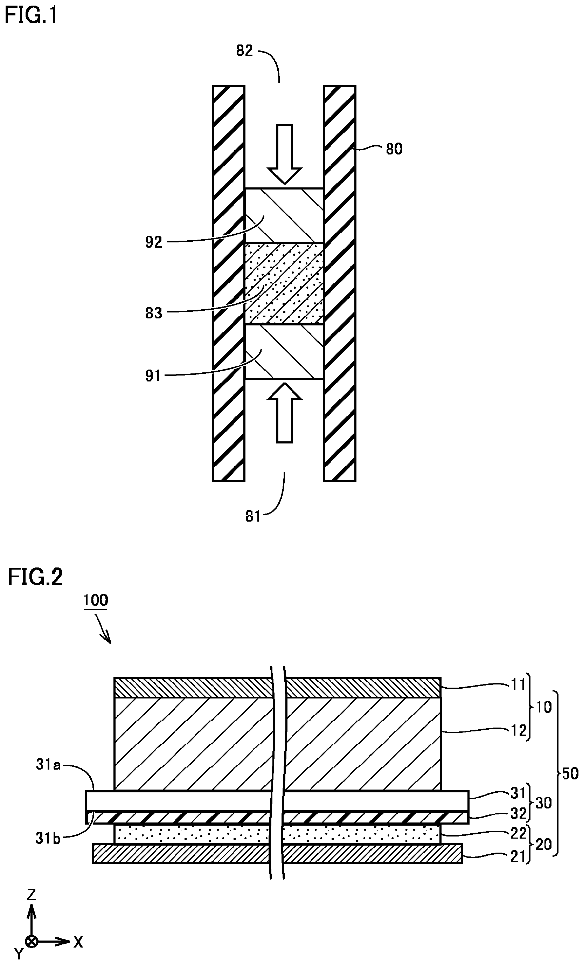

"Li-ion conductivity" is measured by the procedure described below. Fig. 1 is a conceptual view illustrating the method of measuring Li-ion conductivity. A cylinder jig 80 is prepared. Cylinder jig 80 has a first open end face 81 and a second open end face 82. The interior wall of cylinder jig 80 has been subjected to insulation treatment. A first piston 91 and a second piston 92 are prepared. Each of first piston 91 and second piston 92 is made of stainless steel (SUS). Through first open end face 81, first piston 91 is inserted. A sample 83 (powder of a Li-ion conductor) is loaded into cylinder jig 80 above first piston 91. Through second open end face 82, second piston 92 is inserted. First piston 91 and second piston 92 are pushed so that a pressure of 5 tf/cm² (490 MPa) is applied to sample 83. Due to the pressure, sample 83 may be shaped into a disk-shaped pellet. Alternatively, sample 83 may be shaped into a cylindrical pellet. To each of first piston 91 and second piston 92, a current voltage terminal is connected. Alternating-current impedance is measured with an impedance analyzer (manufactured by Solartron, for example). The temperature at the time of measurement is 25°C. On a Cole-Cole plot, from the point of intersection of the semicircle and the real axis (the horizontal axis), resistance is determined. By the following equation (1-1), Li-ion conductivity is determined.

$$\sigma = 1/\{(R \times A)/T)\} \qquad (1\text{-}1)$$

σ: Li-ion conductivity
R: Resistance determined from alternating-current impedance
A: Bottom area of sample 83 (disk-shaped pellet)
T: Thickness (height) of sample 83 (disk-shaped pellet)

When needed, the Li-ion conductivity may be measured by the method described below. A separator that includes a porous base material and a covering layer is prepared. The covering layer includes a Li-ion conductor. An electrolyte solution is prepared. The Li-ion conductivity of the electrolyte solution is measured. The separator is impregnated with the electrolyte solution. The Li-ion conductivity of the separator impregnated with the electrolyte solution is measured. From the measured value, the Li-ion conductivity of the electrolyte solution is subtracted, and thus the Li-ion conductivity of the Li-ion conductor is determined.

"Average particle size" refers to a particle size in volume-based particle size distribution (cumulative distribution) at which the cumulative value reaches 50%. The particle size may also be called "D50". The average particle size may be measured by laser diffraction.

<Li Metal Negative Electrode Secondary Battery>

Fig. 2 is a conceptual view illustrating a Li metal negative electrode secondary battery according to the present embodiment. A battery 100 includes a power generation element 50 and an electrolyte solution (not illustrated).

<Exterior Package>

Battery 100 may include an exterior package (not illustrated). The exterior package may accommodate power generation element 50 and an electrolyte solution. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

<Power Generation Element>

Power generation element 50 includes a positive electrode 10, a negative electrode 20, and a separator 30. Separator 30 is interposed between positive electrode 10 and negative electrode 20. Power generation element 50 may have any configuration. For example, power generation element 50 may be a stack-type one. For example, positive electrode 10 and negative electrode 20 may be alternately stacked with separator 30 interposed between positive electrode 10 and negative electrode 20 to form power generation element 50. For example, separator 30 having a belt-like shape may be folded into a Z-shape, and at each turn of separator 30, positive electrode 10 and negative electrode 20 may be placed alternately. For example, power generation element 50 may be a wound-type one. For example, each of positive electrode 10, negative electrode 20, and separator 30 may have a belt-like shape. For example, positive electrode 10, separator 30, and negative electrode 20 may be stacked in this order to form a stack. The resulting stack may be wound spirally to form power generation element 50. After being wound, the wound power generation element 50 may be shaped into a flat form.

<Separator>

Separator 30 includes a porous base material 31 and a covering layer 32. Porous base material 31 includes a first main face 31a and a second main face 31b. First main face 31a faces positive electrode 10. Second main face 31b faces negative electrode 20. Covering layer 32 covers second main face 31b. Covering layer 32 faces negative electrode 20. Covering layer 32 may cover the entire second main face 31b. Covering layer 32 may cover a part of second main face 31b.

As long as covering layer 32 is formed on second main face 31b, a ceramic layer (not illustrated) and/or the like, for example, may be formed on first main face 31a. A ceramic material included in the ceramic layer may be Li-ion conductive, or may not be Li-ion conductive. The ceramic layer may include alumina, boehmite, and/or the like, for example.

In a cross section parallel to the thickness direction (the Z-axis direction), the width of covering layer 32 may be equal to or more than the width of positive electrode 10 (a positive electrode active material layer 12). The width refers to the dimension in the X-axis direction or in the Y-axis direction. On a negative electrode base material 21, at a region facing positive electrode active material layer 12, Li metal may become deposited. As a result of Li metal deposition, a Li metal layer 22 may be formed. The width of negative electrode base material 21 may be equal to or more than the width of covering layer 32.

<Thickness of Covering Layer>

Covering layer 32 may have a thickness from 0.1 to 20 $\mu$m, or from 0.4 to 16 $\mu$m, or from 0.5 to 15 $\mu$m, for example. With the thickness of covering layer 32 being from 0.5 to 15 $\mu$m, cycle endurance is expected to be improved. The thickness of covering layer 32 may be 3 $\mu$m or more, or 8 $\mu$m or more, or 10 $\mu$m or more, for example. The thickness of covering layer 32 may be 10 $\mu$m or less, or 8 $\mu$m or less, or 3 $\mu$m or less, for example.

<Average Particle Size of Li-Ion Conductor>

Covering layer 32 includes a Li-ion conductor. The Li-ion conductor is solid. The Li-ion conductor may be a particle group. The Li-ion conductor may have an average particle size from 100 to 3000 nm, or from 200 to 2000 nm, or from 300 to 1500 nm, for example. With the average particle size of the Li-ion conductor being from 300 to 1500 nm, cycle endurance is expected to be improved. The average particle size of the Li-ion conductor may be 500 nm or more, or 1000 nm or more, or 1300 nm or more, for example. The average particle size of the Li-ion conductor may be 1300 nm or less, or 1000 nm or less, or 500 nm or less, for example.

<Li-Ion Conductivity of Li-Ion Conductor>

The Li-ion conductor has a Li-ion conductivity of $1.0 \times 10^{-13}$ to $2.0 \times 10^{-9}$ S/cm. With the Li-ion conductivity being from $1.0 \times 10^{-13}$ to $2.0 \times 10^{-9}$ S/cm, cycle endurance is expected to be improved. The Li-ion conductivity may be $1.0 \times 10^{-12}$ S/cm or more, or $1.0 \times 10^{-11}$ S/cm or more, or $1.0 \times 10^{-10}$ S/cm or more, for example. The Li-ion conductivity may be $1.0 \times 10^{-10}$ S/cm or less, or $1.0 \times 10^{-11}$ S/cm or less, or $1.0 \times 10^{-12}$ S/cm or less, for example.

<Composition of Li-Ion Conductor>

As long as having a Li-ion conductivity of $1.0 \times 10^{-13}$ to $2.0 \times 10^{-9}$ S/cm, the Li-ion conductor may have any composition. The Li-ion conductor may include a first component, a second component, and a third component, for example. The first component is Li.

The second component is at least one selected from the group consisting of Mg, Al, Ti, Zn, Zr, Nb, Mo, Ta, W, and a rare earth element. The "rare earth element" may include lanthanoid, for example. The rare earth element may include, for example, at least one selected from the group consisting of Sc, Y, La, Ce, Pr, Nd, Pm, Sm, Eu, Gd, Tb, Dy, Ho, Er, Tm, Yb, and Lu.

The third component is at least one selected from the group consisting of B, N, O, Si, P, S, Ge, and a halogen. The "halogen" may include, for example, at least one selected from the group consisting of F, Cl, Br, and I.

The Li-ion conductor may include a phosphoric acid compound, for example. The Li-ion conductor may include $Li_3PO_4$, for example.

The Li-ion conductor may include a nitride phosphate compound (LIPON), for example. The Li-ion conductor may have a composition of the following formula (1-2), for example.

$$Li_xPO_yN_z \qquad (1\text{-}2)$$

In the above formula (1-2), x may satisfy the relationship of $2 \leq x < 3$, for example. y may satisfy the relationship of $3 \leq y < 4$, for example. z may satisfy the relationship of $0.1 < z < 0.5$, for example.

The Li-ion conductor may be of NASICON type, for example. The Li-ion conductor may have a composition of the following formula (1-3), for example.

$$Li_{1+x}Al_xM_{2-x}(PO_4)_3 \qquad (1\text{-}3)$$

In the above formula (1-3), M is at least one selected from the group consisting of Ti and Ge. x satisfies the relationship of $0 \leq x \leq 2$.

The Li-ion conductor may have a composition of the following formula (1-4), for example.

$$Li_{1-x}Al_xM_{2-x}(PO_4)_3 \qquad (1\text{-}4)$$

In the above formula (1-4), M is at least one selected from the group consisting of Ti and Ge. x satisfies the relationship of $0.3 \leq x \leq 0.4$.

The Li-ion conductor may include a composite oxide, for example. The Li-ion conductor may include at least one selected from the group consisting of $LiNbO_3$, $Li_2WO_4$, $Li_3BO_3$, $LiBO_2$, $Li_2SO_4$, $Li_2SO_3$, $Li_2TiO_3$, $Li_2Ti_2O_5$, $Li_2MoO_4$, $Li_2ZrO_3$, and $LiAlO_2$, for example.

The Li-ion conductor may include a garnet-type oxide, for example. The Li-ion conductor may have a composition of the following formula (1-5), for example.

$$Li_{7-x}M^1Zr_{2-x}M^2{}_yO_{12} \qquad (1\text{-}5)$$

In the above formula (1-5), $M^1$ is a rare earth element. $M^1$ may be La, for example. $M^2$ is at least one selected from the group consisting of Mg, Nb, and Ta, for example. x may satisfy the relationship of $0 \leq x \leq 1$, for example. y may satisfy the relationship of $0 \leq y \leq 1$, for example.

The Li-ion conductor may include a perovskite-type oxide, for example. The Li-ion conductor may have a composition of the following formula (1-6), for example.

$$Li_{3x}La_{0.66-x}TiO_3 \qquad (1\text{-}6)$$

In the above formula (1-6), x may satisfy the relationship of $0 < x < 0.66$, for example.

The Li-ion conductor may have a composition of the following formula (1-7), for example.

$$\mathrm{Li}_{3x}\mathrm{La}_{0.33-x}\mathrm{NbO}_3 \qquad (1\text{-}7)$$

In the above formula (1-7), x may satisfy the relationship of $0<x<0.33$, for example.

The Li-ion conductor may include an inverted-perovskite-type compound, for example. The Li-ion conductor may have a composition of the following formula (1-8), for example.

$$\mathrm{Li}_{3-x}(\mathrm{OH}_x)\mathrm{Cl} \qquad (1\text{-}8)$$

In the above formula (1-8), x may satisfy the relationship of $0 \leq x \leq 1$, for example.

The Li-ion conductor may be of LISICON type, for example. The Li-ion conductor may have a composition of the following formula (1-9), for example.

$$\mathrm{Li}_{2+2x}\mathrm{Zn}_{1-x}\mathrm{GeO}_4 \qquad (1\text{-}9)$$

In the above formula (1-9), x may satisfy the relationship of $-0.36<x<0.87$, for example.

The Li-ion conductor may include an oxide glass, for example. The oxide glass may be glass ceramic (partially crystallized glass). The glass may be a solid solution. For example, the composition of the glass may be expressed as its raw material composition. For example, "$\mathrm{Li}_2\mathrm{O}\text{-}\mathrm{Al}_2\mathrm{O}_3\text{-}\mathrm{SiO}_2\text{-}\mathrm{P}_2\mathrm{O}_5\text{-}\mathrm{TiO}_2$" represents a material produced by mixing $\mathrm{Li}_2\mathrm{O}$, $\mathrm{Al}_2\mathrm{O}_3$, $\mathrm{SiO}_2$, $\mathrm{P}_2\mathrm{O}_5$, and $\mathrm{TiO}_2$ in a freely-selected molar ratio. The mixing ratio may be expressed with the number placed in front of each raw material. For example, "$50\mathrm{Li}_4\mathrm{SiO}_4\text{-}50\mathrm{Li}_3\mathrm{BO}_3$" means that the mixing ratio is "$\mathrm{Li}_4\mathrm{SiO}_4/\mathrm{Li}_3\mathrm{BO}_3=50/50$ (molar ratio)". The raw material of the glass may include at least one selected from the group consisting of $\mathrm{Li}_2\mathrm{O}$, $\mathrm{Al}_2\mathrm{O}_3$, $\mathrm{SiO}_2$, $\mathrm{P}_2\mathrm{O}_5$, $\mathrm{TiO}_2$, $\mathrm{Li}_2\mathrm{SO}_4$, $\mathrm{Li}_3\mathrm{BO}_3$, $\mathrm{Li}_3\mathrm{BO}_4$, $\mathrm{Li}_4\mathrm{SiO}_4$, and $\mathrm{Li}_3\mathrm{PO}_4$, for example. The Li-ion conductor may include at least one selected from the group consisting of $\mathrm{Li}_2\mathrm{O}\text{-}\mathrm{Al}_2\mathrm{O}_3\text{-}\mathrm{SiO}_2\text{-}\mathrm{P}_2\mathrm{O}_5\text{-}\mathrm{TiO}_2$, $\mathrm{Li}_2\mathrm{SO}_4\text{-}\mathrm{Li}_3\mathrm{BO}_3$, $\mathrm{Li}_3\mathrm{BO}_4\text{-}\mathrm{Li}_4\mathrm{SiO}_4$, and $\mathrm{Li}_3\mathrm{PO}_4\text{-}\mathrm{Li}_3\mathrm{BO}_3$, for example.

The Li-ion conductor may include a sulfide, a halide, and/or the like, for example. The sulfide may be glass, glass ceramic, argyrodite, and/or the like, for example. The Li-ion conductor may include at least one selected from the group consisting of $\mathrm{Li}_{10}\mathrm{GeP}_2\mathrm{S}_{12}$, $\mathrm{Li}_7\mathrm{P}_3\mathrm{S}_{11}$, $\mathrm{Li}_{3.25}\mathrm{Ge}_{0.25}\mathrm{P}_{0.75}\mathrm{S}_4$, $\mathrm{Li}_{3.25}\mathrm{P}_{0.95}\mathrm{S}_4$, $\mathrm{Li}_6\mathrm{PS}_5\mathrm{Cl}$, $\mathrm{LiI}$, $\mathrm{B}_2\mathrm{S}_3$, $\mathrm{Li}_2\mathrm{S}$, and $\mathrm{Si}_2\mathrm{S}_2$, for example. The Li-ion conductor may include at least one selected from the group consisting of $\mathrm{Li}_2\mathrm{S}\text{-}\mathrm{B}_2\mathrm{S}_3\text{-}\mathrm{LiI}$, $\mathrm{Li}_2\mathrm{S}\text{-}\mathrm{Si}_2\mathrm{S}_2\text{-}\mathrm{LiI}$, and $\mathrm{Li}_2\mathrm{S}\text{-}\mathrm{Si}_2\mathrm{S}_2\text{-}\mathrm{Li}_4\mathrm{SiO}_4$, for example.

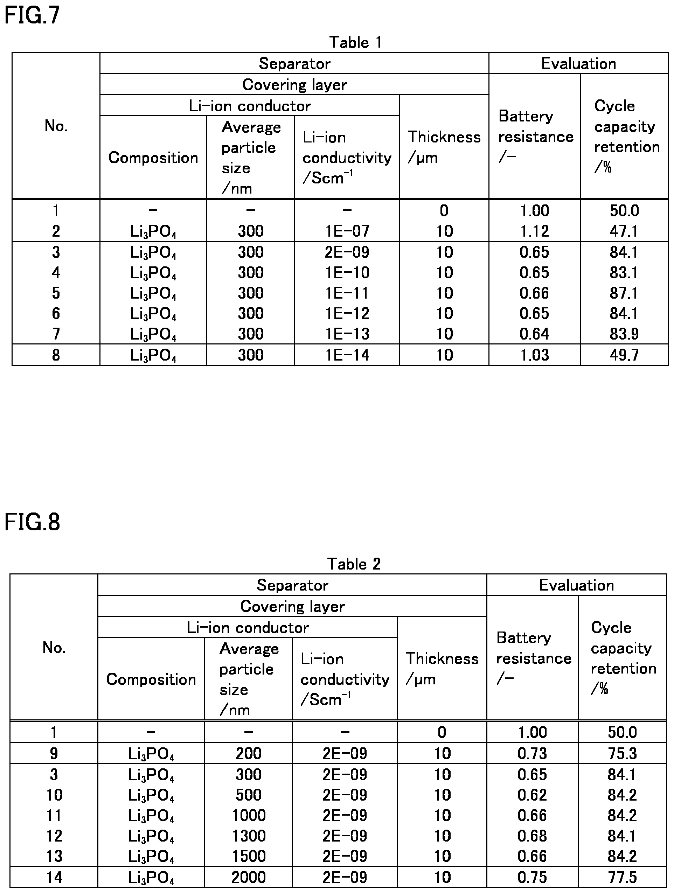

The Li-ion conductor may include at least one selected from the materials listed in Fig. 7 to Fig. 11, for example.

<Method for Adjusting Li-Ion Conductivity>

Usually, the Li-ion conductor having the composition described above has a Li-ion conductivity of $10^{-5}$ S/cm or more. In order to achieve a Li-ion conductivity from $1.0 \times 10^{-13}$ to $2.0 \times 10^{-9}$ S/cm, the Li-ion conductivity is reduced. For example, the Li-ion conductor may be subjected to pulverization treatment and sintering treatment that are repeated alternately. The pulverization treatment may be carried out with a mechanochemical apparatus and/or the like, for example. The sintering treatment may be carried out at a low temperature. The sintering temperature may be about 200°C, for example.

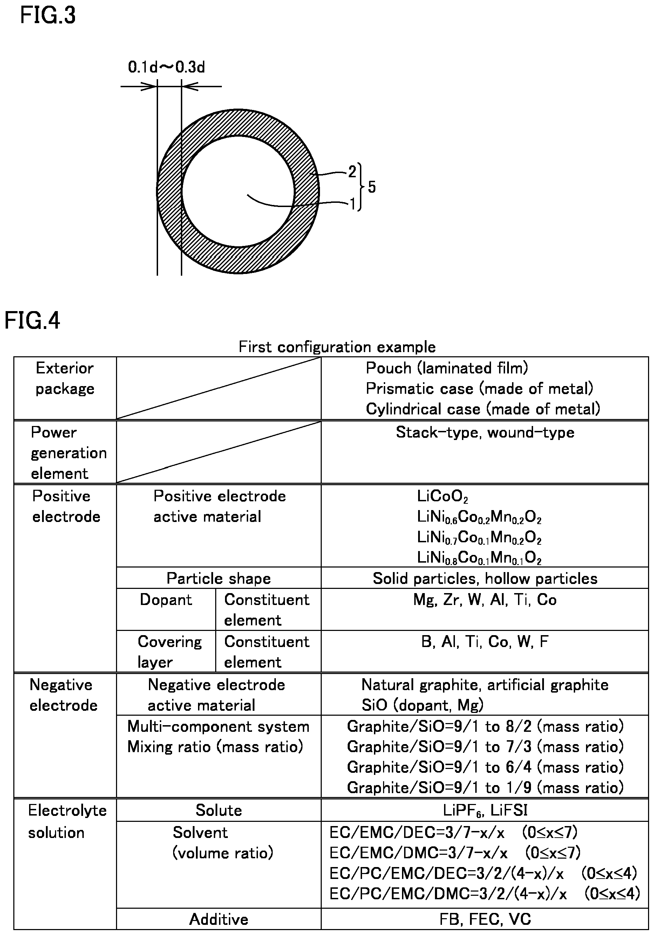

Fig. 3 is a conceptual view illustrating a Li-ion conductor according to the present embodiment. In Fig. 3, a cross section of the Li-ion conductor (a particle 5) is conceptually illustrated. Particle 5 may include a central portion 1 and a surface layer portion 2. Surface layer portion 2 surrounds central portion 1. Due to the alternate repetition of pulverization treatment and sintering treatment, the crystallinity of surface layer portion 2 may be disturbed. Due to the disturbance of the crystallinity of surface layer portion 2, the Li-ion conductivity of particle 5 may be decreased. That is, the crystallinity of surface layer portion 2 may become lower than that of central portion 1. The crystallinity of central portion 1 and surface layer portion 2 may be evaluated by micro XRD (micro X-Ray Diffraction) and/or the like, for example. In a cross section of particle 5, the width of surface layer portion 2 may be from 0.1d to 0.3d (0.1 to 0.3 times of d), for example. "d" refers to the average particle size of the Li-ion conductor.

<Binder>

For example, covering layer 32 may further include a binder. For example, covering layer 32 may include a binder in a mass fraction of 50% or less, with the remainder being made up of the Li-ion conductor. For example, the mass fraction of the binder may be from 5 to 40%, or from 10 to 30%. The binder may include any component. The binder may include, for example, at least one selected from the group consisting of polyvinylidene difluoride (PVDF), vinylidene difluoride-hexafluoropropylene copolymer (PVDF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, styrene-butadiene rubber (SBR), acrylate butadiene rubber (ABR), polyacrylonitrile (PAN), and derivatives of these.

<Porous Base Material>

Porous base material 31 is in film form. Porous base material 31 may have a thickness from 5 to 50 $\mu$m, or from 10 to 25 $\mu$m, for example. Porous base material 31 may have an average pore size from 0.1 to 1 $\mu$m, or from 0.1 to 0.5 $\mu$m, for example. "Average pore size" may be measured by mercury porosimetry. Porous base material 31 may have a Gurley value from 50 to 250 s/100cm$^3$, for example. "Gurley value" may be measured by a Gurley test method.

Porous base material 31 is electrically insulating. Porous base material 31 may include a resin film and/or the like, for example. The resin film may include, for example, at least one selected from the group consisting of an olefin-based resin, a urethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

<Negative Electrode>

Negative electrode 20 may be in sheet form, plate form, and/or the like, for example. Negative electrode 20 includes negative electrode base material 21. At an SOC above 0%, negative electrode 20 may include Li metal layer 22. As the Li metal deposition reaction (charging) proceeds, the thickness of Li metal layer 22 may increase. As the Li metal dissolution reaction (discharging) proceeds, the thickness of Li metal layer 22 may decrease.

Negative electrode base material 21 may serve as a place for Li metal deposition. Negative electrode base material 21 is electrically conductive. Negative electrode base material 21 may function as a current collector. Negative electrode base material 21 may have a thickness from 5 to 50 $\mu$m, for example. Negative electrode base material 21 may include a metal foil, a metal porous body, and/or the like, for example. Negative electrode base material 21 may include at least one selected from the group consisting of Cu, Ni, Fe, Zn, Pb, Ag, and Au, for example. Negative electrode base material 21 may include a Cu foil, a Cu alloy foil, and/or the like, for example.

At an SOC of 0% (or before initial charging), negative electrode 20 may include a Li foil, for example. The Li foil may form Li metal layer 22.

Negative electrode 20 may further include seed particles (not illustrated), for example. The seed particles may serve as seeds for Li metal nucleation during charging (at the time of deposition). The seed particles may be placed on the surface of negative electrode base material 21, for example. The seed particles may include, for example, at least one selected from the group consisting of Li, Mg, Al, Zn, Ag, Pt, and Au. The seed particles may be nanoparticles, for example. The seed particles may have an average particle size (D50) from 1 to 200 nm, for example.

Negative electrode 20 may further include a negative electrode active material other than Li metal (hereinafter also called "a second negative electrode active material"), for example. The second negative electrode active material may include an insertion-based active material, an alloy-based active material, and/or the like, for example. A combination of Li metal and an insertion-based active material can enhance cycle endurance and/or the like, for example. The second negative electrode active material may be in particle form, for example. The second negative electrode active material may be placed on the surface of negative electrode base material 21, for example. On at least part of the surface of negative electrode base material 21, a negative electrode active material layer (not illustrated) may be formed. The negative electrode active material layer may include the second negative electrode active material and a binder, for example. The binder may include CMC, SBR, and/or the like, for example.

The second negative electrode active material may include, for example, at least one selected from the group consisting of natural graphite, artificial graphite, soft carbon, hard carbon, Si, SiO, Li silicate, Si-based alloy, Sn, SnO, Sn-based alloy, and $Li_4Ti_5O_{12}$.

The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The graphite may include a dopant. The dopant may include, for example, at least one selected from the group consisting of B, N, P, Li, and Ca. The amount to be added may be from 0.01 to 5%, or from 0.1 to 3%, or from 0.1 to 1% in molar fraction, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of $Al(OH)_3$, AlOOH, $Al_2O_3$, $WO_3$, $Li_2CO_3$, $LiHCO_3$, and $Li_3PO_4$.

SiO may be represented by the following formula (2-1), for example.

$$SiO_x \qquad (2\text{-}1)$$

In the above formula (2-1), the relationship of $0 < x < 2$ may be satisfied. For example, the relationship of $0.5 \leq x \leq 1.5$ or $0.8 \leq x \leq 1.2$ may be satisfied.

Li silicate may include, for example, at least one selected from the group consisting of $Li_4SiO_4$, $Li_2SiO_3$, $Li_2Si_2O_5$, and $Li_8SiO_6$. The second negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be from 0.01 to 5%, or from 0.1 to 3%, or from 0.1 to 1% in molar fraction, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

The second negative electrode active material may include two or more components. The second negative electrode active material may include the carbon-based active material (such as graphite) and the alloy-based active material (such as Si, SiO), for example. The mixing ratio (mass ratio) of the carbon-based active material and the alloy-based active material may be "(carbon-based active material)/(alloy-based active material)=1/9 to 9/1", or "(carbon-based active material)/(alloy-based active material)=2/8 to 8/2", or "(carbon-based active material)/(alloy-based active material)=3/7 to 7/3", or "(carbon-based active material)/(alloy-based active material)=4/6 to 6/4", for example.

The second negative electrode active material may include a composite material of the carbon-based active material (such as graphite) and the alloy-based active material (such as Si), for example. A composite material including Si and carbon may also be called "an Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and a graphite mixture may be used.

<Positive Electrode>

Positive electrode 10 may be in sheet form, for example. Positive electrode 10 may include a positive electrode base material 11 and a positive electrode active material layer 12, for example. Positive electrode base material 11 is electrically conductive. Positive electrode base material 11 may function as a current collector. Positive electrode base material 11 supports positive electrode active material layer 12. Positive electrode base material 11 may be in sheet form, for example. Positive electrode base material 11 may have a thickness from 5 to 50 $\mu$m, for example. Positive electrode base material 11 may include a metal foil, for example. Positive electrode base material 11 may include at least one selected from the group consisting of Al, Mn, Ti, Fe, and Cr, for example. Positive electrode base material 11 may include an Al foil, an Al alloy foil, a Ti foil, an SUS foil, and/or the like, for example.

Between positive electrode base material 11 and positive electrode active material layer 12, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material and the binder are described below. The insulation material may include alumina, boehmite, aluminum hydroxide, and/or the like, for example.

Positive electrode active material layer 12 is placed on the surface of positive electrode base material 11. Positive electrode active material layer 12 may be placed on only one side of positive electrode base material 11. Positive electrode active material layer 12 may be placed on both sides of positive electrode base material 11. Positive electrode active material layer 12 may have a thickness from 10 to 1000 $\mu$m, or from 50 to 500 $\mu$m, or from 100 to 300 $\mu$m, for example. Positive electrode active material layer 12 includes a positive electrode active material. Positive electrode active material layer 12 may further include a conductive material, a binder, and the like, for example.

The conductive material may form an electron conduction path inside the positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fiber (VGCF), carbon nanotube (CNT), and graphene flake (GF).

The binder is capable of fixing positive electrode active material layer 12 to positive electrode base material 11. The amount of the binder to be used may be, for example, from 0.1 to 10 parts by mass relative to 100 parts by mass of the positive electrode active material. The binder may include any component. The binder may include, for example, at least one selected from the group consisting of PVDF, PVDF-HFP, PTFE, CMC, PAA, PVA, PVP, polyoxyethylene alkyl ether, and derivatives of these.

Positive electrode active material layer 12 may further include an inorganic filler, an organic filler, a solid electrolyte, a surface modifier, a lubricant, a flame retardant, a protective agent, a flux, a coupling agent, an adsorbent, and/or the like, for example. Positive electrode active material layer 12 may include polyoxyethylene allylphenyl ether phosphate, zeolite, a silane coupling agent, $MoS_2$, $WO_3$, and/or the like, for example.

The positive electrode active material may be in particle form, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (3-1), for example.

$$Li_{1-a}Ni_xM_{1-x}O_2 \qquad (3\text{-}1)$$

In the above formula (3-1), M may include, for example, at least one selected from the group consisting of Co, Mn, and Al. For example, the relationships of $-0.5 \leq a \leq 0.5$, $0 < x \leq 1$ may be satisfied.

For example, the relationship of $-0.4 \leq a \leq 0.4$, $-0.3 \leq a \leq 0.3$, $-0.2 \leq a \leq 0.2$, or $-0.1 \leq a \leq 0.1$ may be satisfied.

For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

The transition metal oxide may be represented by the following formula (3-2), for example. A compound represented by the following formula (3-2) may also be called "NCM".

$$Li_{1-a}Ni_xCo_yMn_zO_2 \qquad (3\text{-}2)$$

In the above formula (3-2), the relationships of $-0.5 \leq a \leq 0.5$, $0 < x < 1$, $0 < y < 1$, $0 < z < 1$, $x+y+z=1$ may be satisfied, for example.

For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied.

For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied.

For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

The transition metal oxide may be represented by the following formula (3-3), for example. A compound represented by the following formula (3-3) may also be called "NCA".

$$Li_{1-a}Ni_xCo_yAl_zO_2 \qquad (3\text{-}3)$$

In the above formula (3-3), the relationships of $-0.5 \leq a \leq 0.5$, $0 < x < 1$, $0 < y < 1$, $0 < z < 1$, $x+y+z=1$ may be satisfied, for example.

For example, the relationship of $0<x\leq0.1$, $0.1\leq x\leq0.2$, $0.2\leq x\leq0.3$, $0.3\leq x\leq0.4$, $0.4\leq x\leq0.5$, $0.5\leq x\leq0.6$, $0.6\leq x\leq0.7$, $0.7\leq x\leq0.8$, $0.8\leq x\leq0.9$, or $0.9\leq x<1$ may be satisfied.

For example, the relationship of $0<y\leq0.1$, $0.1\leq y\leq0.2$, $0.2\leq y\leq0.3$, $0.3\leq y\leq0.4$, $0.4\leq y\leq0.5$, $0.5\leq y\leq0.6$, $0.6\leq y\leq0.7$, $0.7\leq y\leq0.8$, $0.8\leq y\leq0.9$, or $0.9\leq y<1$ may be satisfied.

For example, the relationship of $0<z\leq0.1$, $0.1\leq z\leq0.2$, $0.2\leq z\leq0.3$, $0.3\leq z\leq0.4$, $0.4\leq z\leq0.5$, $0.5\leq z\leq0.6$, $0.6\leq z\leq0.7$, $0.7\leq z\leq0.8$, $0.8\leq z\leq0.9$, or $0.9\leq z<1$ may be satisfied.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

The positive electrode active material may include two or more NCMs and/or the like, for example. The positive electrode active material may include NCM ($0.6\leq x$) and NCM ($x<0.6$), for example. "NCM ($0.6\leq x$)" refers to a compound in which x (Ni ratio) in the above formula (3-2) is 0.6 or more. NCM ($0.6\leq x$) may also be called "a high-nickel material", for example. NCM ($0.6\leq x$) includes $LiNi_{0.8}Co_{0.1}Mn_{0.1}O_2$ and/or the like, for example. "NCM($x<0.6$)" refers to a compound in which x (Ni ratio) in the above formula (3-2) is less than 0.6. NCM ($x<0.6$) includes $LiNi_{1/3}Co_{1/3}Mn_{1/3}O_2$ and/or the like, for example. The mixing ratio (mass ratio) between NCM ($0.6\leq x$) and NCM ($x<0.6$) may be "NCM ($0.6\leq x$)/NCM ($x<0.6$)=9/1 to 1/9", or "NCM ($0.6\leq x$)/NCM ($x<0.6$)=9/1 to 4/6", or "NCM ($0.6\leq x$)/NCM ($x<0.6$)=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

The transition metal oxide may include a crystal structure that belongs to a space group C2/m and/or the like, for example. The transition metal oxide may be represented by the following formula (3-4), for example.

$$Li_2MO_3 \qquad (3\text{-}4)$$

In the above formula (3-4), M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

The transition metal oxide may include a crystal structure that belongs to a space group Fd-3m, and/or the like, for example. The transition metal oxide may be represented by, for example, the following formula (3-5):

$$LiMn_{2-x}M_xO_4 \qquad (3\text{-}5)$$

In the above formula (3-5), M may include, for example, at least one selected from the group consisting of Ni, Fe, and Zn. For example, the relationship of $0\leq x\leq2$ may be satisfied.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2$/$LiM_2O_4$=9/1 to 9/1", "$LiMO_2$/$LiM_2O_4$=9/1 to 5/5", or "$LiMO_2$/$LiM_2O_4$=9/1 to 7/3", for example.

The polyanion compound may include a phosphoric acid salt (such as $LiFePO_4$ for example), a silicic acid salt, a boric acid salt, and/or the like, for example. The polyanion compound may be represented by the following formulae (3-6) to (3-9), for example.

$$LiMPO_4 \qquad (3\text{-}6)$$

$$Li_{2-x}MPO_4F \qquad (3\text{-}7)$$

$$Li_2MSiO_4 \qquad (3\text{-}8)$$

$$LiMBO_3 \qquad (3\text{-}9)$$

In the above formulae (3-6) to (3-9), M may include, for example, at least one selected from the group consisting of Fe, Mn, Co. In the above formula (3-7), the relationship of $0\leq x\leq2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound

may be "$LiMO_2$/(polyanion compound) =9/1 to 9/1", "$LiMO_2$/(polyanion compound) =9/1 to 5/5", or "$LiMO_2$/(polyanion compound) =9/1 to 7/3", for example.

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added. For example, to NCM, Ti may be added. For example, to NCM, a combination of "Zr, W", a combination of "Si, W", or a combination of "Zr, W, Al, Ti, Co" may be added.

Positive electrode 10 may include a composite particle. The composite particle includes a core particle and a shell layer. The core particle includes a positive electrode active material. The shell layer covers at least part of the surface of the core particle. The shell layer may have a thickness from 1 to 3000 nm, or from 5 to 2000 nm, or from 10 to 1000 nm, or from 10 to 100 nm, or from 10 to 50 nm, for example. The thickness of the shell layer may be measured in an SEM (Scanning Electron Microscope) image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the shell layer is measured in twenty fields of view. The arithmetic mean of a total of 200 thickness measurements is used.

The ratio of the part of the surface of the core particle covered by the shell layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample (powder) is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (3-10), the covering rate is determined.

$$\theta = \{I_1/(I_0+I_1)\} \times 100 \qquad (3\text{-}10)$$

θ: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The shell layer may include any component. The shell layer may include an elementary substance, organic matter, an inorganic acid salt, an organic acid salt, a hydroxide, an oxide, a carbide, a nitride, a sulfide, a halide, and/or the like, for example. The shell layer may include, for example, at least one selected from the group consisting of B, Al, W, Zr, Ti, Co, F, lithium compound (such as $Li_2CO_3$, $LiHCOs$, LiOH, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as Na salt, Li salt, $NH_4$ salt), $LiNbO_3$, $Li_2TiO_3$, and Li-containing halide (such as $LiAlCl_4$, $LiTiAlF_6$, $LiYBr_6$, $LiYCl_6$, for example).

Each of "a hollow particle" and "a solid particle" is a secondary particle (an aggregate of primary particles). In a cross-sectional image of "a hollow particle", the proportion of the area of the central cavity relative to the entire cross-sectional area of the particle is 30% or more. The proportion of the cavity in the hollow particle may be 40% or more, or 50% or more, or 60% or more, for example. In a cross-sectional image of "a solid particle", the proportion of the area of the central cavity relative to the entire cross-sectional area of the particle is less than 30%. The proportion of the cavity in the solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include "large particles" and "small particles". When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles ($d_S$). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles ($S_S$) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x < 0.6$).

<Electrolyte Solution>

The electrolyte solution is a liquid electrolyte. The electrolyte solution includes Li ions. The electrolyte solution may include a solute and a solvent, for example.

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ which has the common name "LiFSI", $LiN(SO_2CF_3)_2$ which has the common name "LiTFSI", $LiB(C_2O_4)_2$ which has the common name "LiBOB", $LiBF_2(C_2O_4)$ which has the common name "LiDFOB", $LiPF_2(C_2O_4)_2$ which has the common name "LiDFOP", $LiPO_2F_2$, $FSO_3Li$, LiI, LiBr, and derivatives of these.

The electrolyte solution may include an ether-based solvent, for example. The solvent may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, hydrofluoroether (HFE), and derivatives of these.

HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

HFE may include, for example, at least one selected from the group consisting of 1,1,2,2-tetrafluoroethyl 2,2,3,3-tetrafluoropropyl ether, 2,2,2-trifluoroethyl ether, difluoromethyl 2,2,3,3-tetrafluoropropyl ether, 2,2,3,3-tetrafluoropropyl 1,1,2,3,3,3-hexafluoropropyl ether, 2,2,3,3,4,4,5,5-octafluoropentyl 1,1,2,2-tetrafluoroethyl ether, and derivatives of these.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (4-1), for example.

$$V_{EC} + V_{FEC} + V_{EMC} + V_{DMC} + V_{DEC} = 10 \qquad (4\text{-}1)$$

In the above equation (4-1), $V_{EC}$, $V_{FEC}$, $V_{EMC}$, $V_{DMC}$, and $V_{DEC}$ represent the volume ratios of EC, FEC, EMC, DMC, and DEC, respectively.

For example, the relationships of $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, and $6 \leq V_{EMC} + V_{DMC} + V_{DEC} \leq 9$ may be satisfied.

In the above equation (4-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;
the relationship of $3 \leq V_{EMC} \leq 4$ or $6 \leq V_{EMC} \leq 8$ may be satisfied, for example;
the relationship of $3 \leq V_{DMC} \leq 4$ or $6 \leq V_{DMC} \leq 8$ may be satisfied, for example; and
the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as the additive (a trace component). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

The electrolyte solution may include an ionic liquid. The electrolyte solution may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

Battery 100 may include a gelled electrolyte. The gelled electrolyte includes an electrolyte solution and a polymer material. The polymer material may form a polymer matrix. The polymer material may include, for example, at least one selected from the group consisting of PVDF, PVdF-HFP, PAN, PVdF-PAN, polyethylene oxide (PEO), polyethylene glycol (PEG), and derivatives of these.

<Battery Configuration Example>

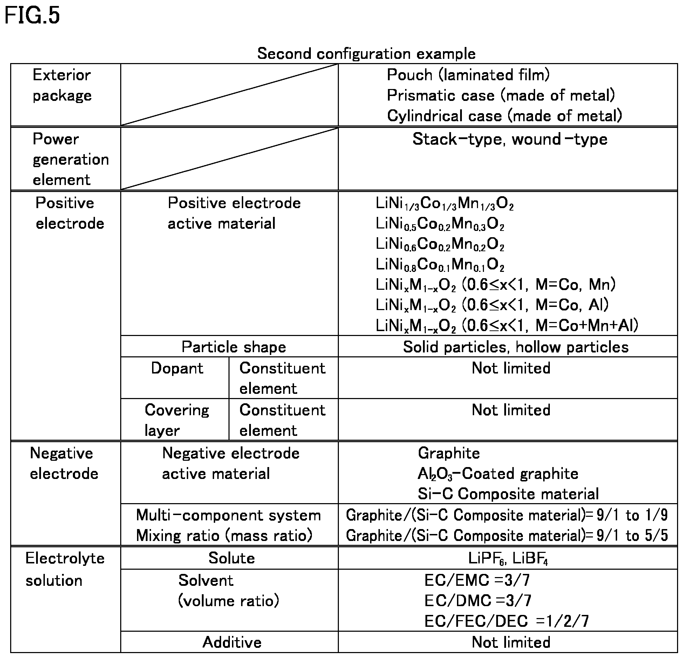

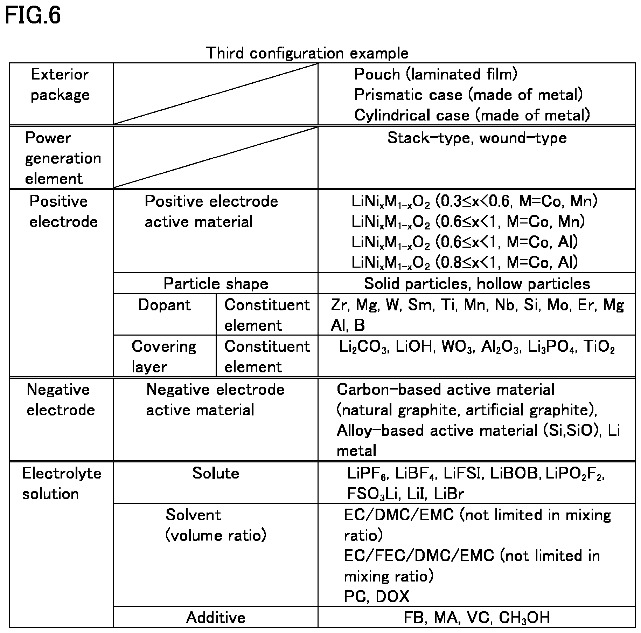

Fig. 4 is a first configuration example. Fig. 5 is a second configuration example. Fig. 6 is a third configuration example. In the table in each figure, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$".

In the present embodiment, as long as separator 30 includes covering layer 32 and a Li metal dissolution/deposition reaction takes place at negative electrode 20, the other configurations (such as the combination of the positive electrode, the negative electrode, and the electrolyte solution, and the like) are not particularly limited. For example, certain elements may be extracted from the first configuration example, the second configuration example, and the third configuration example, and they may be combined together in a freely-selected manner.

[Examples]

<Production of Test Battery>

Test batteries (anode-free batteries) according to Nos. 1 to 60 were produced in the procedure described below. For example, hereinafter, "the test battery according to No. 1" may be simply referred to as "No. 1" and the like.

No. 1

As a positive electrode base material, an Al foil was prepared. A positive electrode coating material was applied to the surface of the Al foil with the use of a die coater, and dried. By this, a positive electrode active material layer was formed. With a rolling mill, the resulting positive electrode active material layer was compressed. Thus, a positive electrode raw sheet was produced. The resulting positive electrode raw sheet was cut into a predetermined shape, and thereby a positive electrode was prepared. The positive electrode active material was $LiNi_{1/3}Co_{1/3}Mn_{1/3}O_2$.

As a porous base material, a resin film (thickness, 20 $\mu$m) was prepared. The resin film included an olefin-based resin. In No. 1, the porous base material alone was used as a separator. In the present example, in all test batteries, the porous base material (a resin film) having the same specifications was used.

As a negative electrode base material, a Cu foil was prepared. The Cu foil was cut into a predetermined shape, and thereby a negative electrode was prepared.

The positive electrode, the separator, and the negative electrode were stacked in this order, and thereby a power generation element was formed. The resulting power generation element was placed inside an exterior package. Into the exterior package, an electrolyte solution was injected. The composition of the electrolyte solution was as described below. After the electrolyte solution was injected, the exterior package was hermetically sealed. In this manner, a test battery was produced.

Composition of electrolyte solution

Solute: LiPF$_6$ (1 mol/L)
Solvent: EC/DMC=1/1 (volume ratio)

No. 2

As a Li-ion conductor, commercially available Li$_3$PO$_4$ powder (with an average particle size of 300 nm, and a Li-ion conductivity of $1 \times 10^{-7}$ S/cm) was prepared. A PVDF solution was prepared. The Li$_3$PO$_4$ powder and the PVDF solution were mixed to prepare a coating material. The mixing ratio was "(Li-ion conductor)/(PVDF solution)=80/20 (mass ratio)". The coating material was applied to one side of the porous base material by gravure coating to form a covering layer. The thickness of the covering layer was 10 $\mu$m. Thus, a separator was prepared. Inside the power generation element, the covering layer faced the negative electrode. Except for these, in the same manner as in No. 1, a test battery was produced.

No. 3

Commercially available Li$_3$PO$_4$ powder (Li-ion conductivity, $1 \times 10^{-7}$ S/cm) was pulverized with the use of a mechanochemical apparatus. The pulverized product was sintered at a low temperature. Pulverization and low-temperature sintering were repeated alternately. In this manner, the Li-ion conductivity of Li$_3$PO$_4$ was adjusted to $2 \times 10^{-9}$ S/cm. Except that this Li$_3$PO$_4$ (Li-ion conductivity, $2 \times 10^{-9}$ S/cm) was used as a Li-ion conductor, in the same manner as in No. 2, a test battery was produced.

No. 4 to No. 8

Fig. 7 is Table 1 showing evaluation results. Each test battery was produced in the same manner as in No. 3 except that the Li-ion conductivity of Li$_3$PO$_4$ was adjusted as specified in Table 1. For example, in Fig. 7 and the like, the expression "2E-09" means "$2 \times 10^{-9}$".

No. 9 to No. 14

Fig. 8 is Table 2 showing evaluation results. Each test battery was produced in the same manner as in No. 3 except that the average particle size of Li$_3$PO$_4$ was changed as specified in Table 2.

No. 15 to No. 20

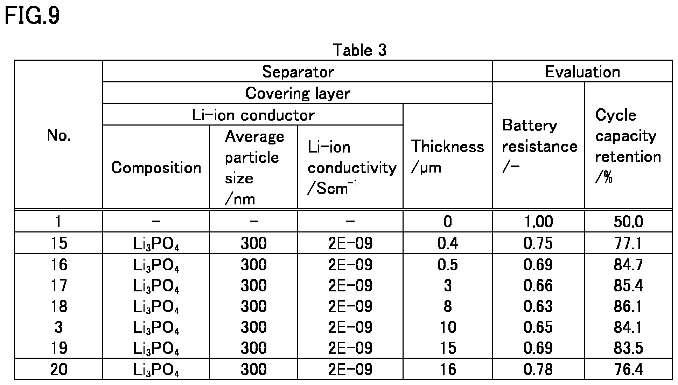

Fig. 9 is Table 3 showing evaluation results. Each test battery was produced in the same manner as in No. 3 except that the thickness of the covering layer was changed as specified in Table 3.

No. 21 to No. 44

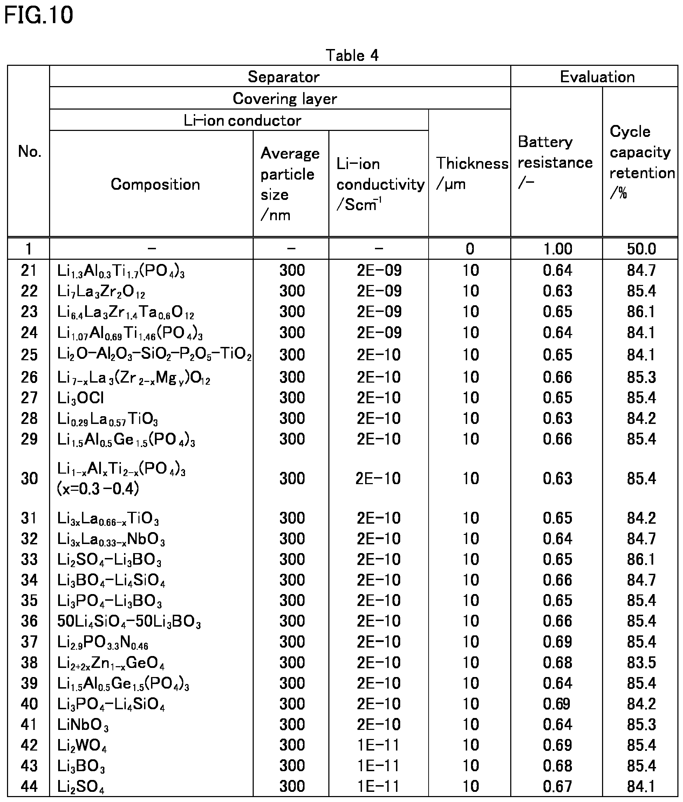

Fig. 10 is Table 4 showing evaluation results. Each test battery was produced in the same manner as in No. 3 except that Li$_3$PO$_4$ was replaced by the Li-ion conductor specified in Table 4.

No. 45 to No. 60

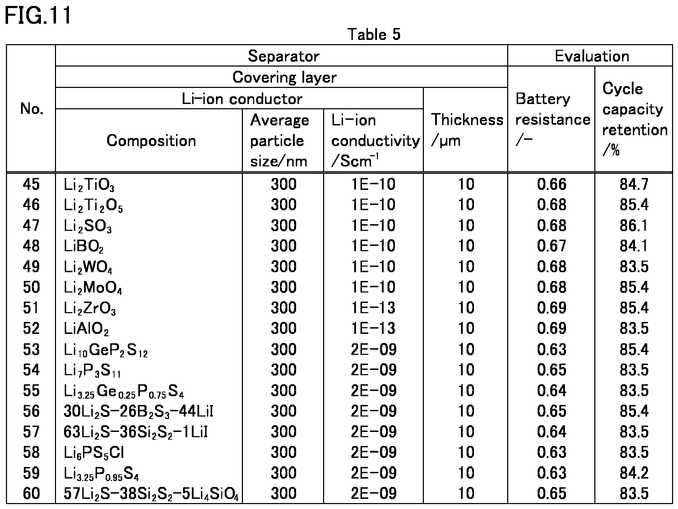

Fig. 11 is Table 5 showing evaluation results. Each test battery was produced in the same manner as in No. 3 except that Li$_3$PO$_4$ was replaced by the Li-ion conductor specified in Table 5.

<Evaluation>

Battery Resistance

The OCV (Open Circuit Voltage) of the test battery was adjusted to 3.7 V. In an environment at a temperature of 30°C, at a current of 5 C, the battery was discharged for 8 seconds. By the following equation (5-1), battery resistance was determined.

$$R=\Delta V/I \qquad (5\text{-}1)$$

R: Battery resistance
ΔV: Amount of voltage drop during 8-second discharging
I: Amount of current equivalent to 5 C

Battery resistance is shown in Table 1 to Table 5 (Fig. 7 to Fig. 11). Each value of battery resistance has been normalized relative to the battery resistance of No. 1 defined as "1". The smaller the value is, the better the power output performance is considered to be. "C" is a symbol denoting the hour rate of current. With a current of 1 C, the rated capacity of a battery is discharged in 1 hour.

Cycle Capacity Retention

Cycle testing was carried out under the conditions described below.
Ambient temperature: 60°C
Charge/discharge mode: Constant-current mode
Current rate: 1 C
Voltage range: 3.3 to 4.2 V
Number of cycles: 200

The discharged capacity at the 200th cycle was divided by the discharged capacity at the first cycle to determine cycle capacity retention. The cycle capacity retention is expressed in percentage. The cycle capacity retention is shown in Table 1 to Table 5 (Fig. 7 to Fig. 11). The higher the cycle capacity retention is, the better the cycle endurance is considered to be.

<Results>

Results from No. 1 to No. 2 indicate that improvement in cycle endurance cannot be expected when ordinary $Li_3PO_4$ (Li-ion conductivity, $1 \times 10^{-7}$ S/cm) is used (see Fig. 7).

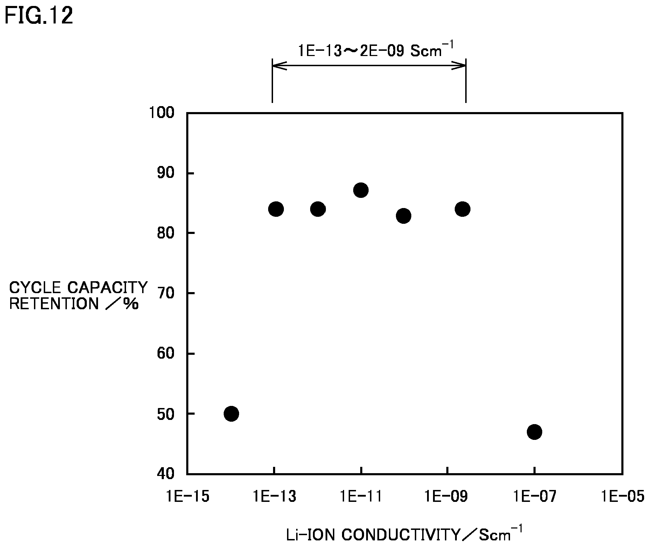

Fig. 12 is a graph plotting the evaluation results of Fig. 7. The graph in Fig. 12 is a single logarithmic graph. The horizontal axis is a logarithmic axis. When the Li-ion conductivity of the Li-ion conductor is from $1.0 \times 10^{-13}$ to $2.0 \times 10^{-9}$ S/cm, cycle endurance tends to be markedly enhanced.
Referring to Fig. 7 (Table 1), there is a tendency that not only cycle endurance but also power output performance is improved. It is conceivable that rectifying Li ions is also effective in reducing battery resistance.

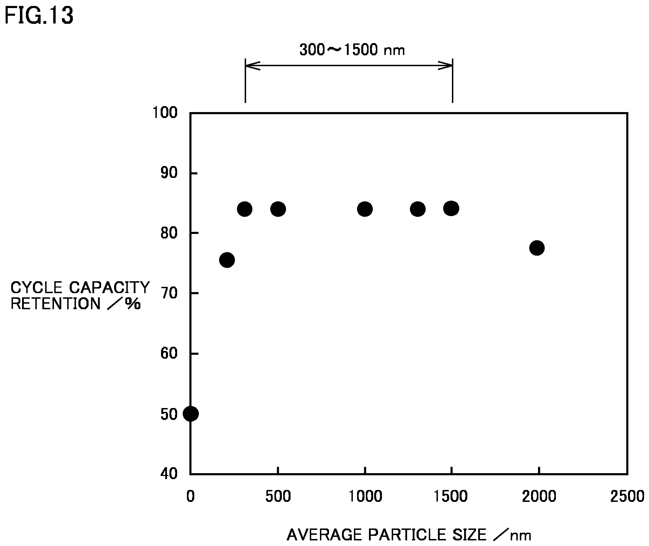

Fig. 13 is a graph plotting the evaluation results of Fig. 8. When the average particle size of the Li-ion conductor is from 300 to 1500 nm, cycle endurance tends to be markedly enhanced.

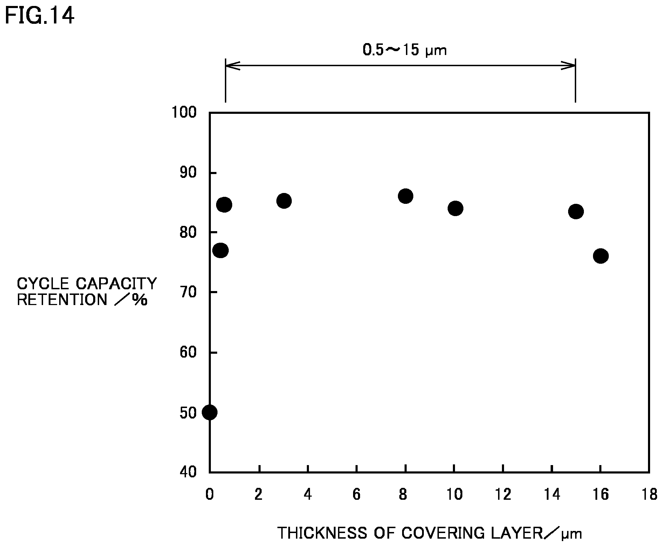

Fig. 14 is a graph plotting the evaluation results of Fig. 9. When the thickness of the covering layer is from 0.5 to 15 μm, cycle endurance tends to be markedly enhanced.
When the Li-ion conductivity of the Li-ion conductor having various compositions is from $1.0 \times 10^{-13}$ to $2.0 \times 10^{-9}$ S/cm, cycle endurance tends to be improved (see Fig. 10, Fig. 11).

**Claims**

1. A lithium metal negative electrode secondary battery comprising:

   a positive electrode (10);
   a separator (30);
   a negative electrode (20); and
   an electrolyte solution, wherein
   the electrolyte solution includes lithium ions,
   the separator (30) is interposed between the positive electrode (10) and the negative electrode (20),
   the separator (30) includes a porous base material (31) and a covering layer (32),
   the porous base material (31) has a first main face (31a) and a second main face (32b),
   the first main face (31a) faces the positive electrode (10),
   the second main face (32b) faces the negative electrode (20),
   the covering layer (32) covers the second main face (32b),
   the covering layer (32) includes a lithium-ion conductor, and

the lithium-ion conductor has a lithium-ion conductivity from $1.0 \times 10^{-13}$ to $2.0 \times 10^{-9}$ S/cm.

2. The lithium metal negative electrode secondary battery according to claim 1, wherein

the lithium-ion conductor includes a first component, a second component, and a third component,
the first component is Li,
the second component is at least one selected from the group consisting of Mg, Al, Ti, Zn, Zr, Nb, Mo, Ta, W, and a rare earth element, and
the third component is at least one selected from the group consisting of B, N, O, Si, P, S, Ge, and a halogen.

3. The lithium metal negative electrode secondary battery according to claim 1 or 2, wherein the lithium-ion conductor has an average particle size from 300 to 1500 nm.

4. The lithium metal negative electrode secondary battery according to claim 1 or 2, wherein the covering layer (32) has a thickness from 0.5 to 15 $\mu$m.

5. The lithium metal negative electrode secondary battery according to claim 1 or 2, wherein the lithium-ion conductor includes lithium phosphate.

6. The lithium metal negative electrode secondary battery according to claim 1 or 2, wherein the lithium metal negative electrode secondary battery is an anode-free battery.

FIG.1

FIG.2

## FIG.3

0.1d~0.3d

## FIG.4

First configuration example

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiCoO_2$ $LiNi_{0.6}Co_{0.2}Mn_{0.2}O_2$ $LiNi_{0.7}Co_{0.1}Mn_{0.2}O_2$ $LiNi_{0.8}Co_{0.1}Mn_{0.1}O_2$ |
| | Particle shape | | Solid particles, hollow particles |
| | Dopant | Constituent element | Mg, Zr, W, Al, Ti, Co |
| | Covering layer | Constituent element | B, Al, Ti, Co, W, F |
| Negative electrode | Negative electrode active material | | Natural graphite, artificial graphite SiO (dopant, Mg) |
| | Multi-component system Mixing ratio (mass ratio) | | Graphite/SiO=9/1 to 8/2 (mass ratio) Graphite/SiO=9/1 to 7/3 (mass ratio) Graphite/SiO=9/1 to 6/4 (mass ratio) Graphite/SiO=9/1 to 1/9 (mass ratio) |
| Electrolyte solution | Solute | | $LiPF_6$, LiFSI |
| | Solvent (volume ratio) | | EC/EMC/DEC=3/7−x/x  (0≤x≤7) EC/EMC/DMC=3/7−x/x  (0≤x≤7) EC/PC/EMC/DEC=3/2/(4−x)/x  (0≤x≤4) EC/PC/EMC/DMC=3/2/(4−x)/x  (0≤x≤4) |
| | Additive | | FB, FEC, VC |

# FIG.5

Second configuration example

| Exterior package | | | Pouch (laminated film)<br>Prismatic case (made of metal)<br>Cylindrical case (made of metal) |
|---|---|---|---|
| Power generation element | | | Stack−type, wound −type |
| Positive electrode | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.6≤x<1, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite<br>$Al_2O_3$−Coated graphite<br>Si−C Composite material |
| | Multi−component system Mixing ratio (mass ratio) | | Graphite/(Si−C Composite material)= 9/1 to 1/9<br>Graphite/(Si−C Composite material)= 9/1 to 5/5 |
| Electrolyte solution | Solute | | $LiPF_6$, $LiBF_4$ |
| | Solvent (volume ratio) | | EC/EMC =3/7<br>EC/DMC =3/7<br>EC/FEC/DEC =1/2/7 |
| | Additive | | Not limited |

# FIG.6

Third configuration example

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode | Positive electrode active material | | $LiNi_xM_{1-x}O_2$ (0.3≤x<0.6, M=Co, Mn)<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material (natural graphite, artificial graphite), Alloy-based active material (Si,SiO), Li metal |
| Electrolyte solution | Solute | | $LiPF_6$, $LiBF_4$, LiFSI, LiBOB, $LiPO_2F_2$, $FSO_3Li$, LiI, LiBr |
| | Solvent (volume ratio) | | EC/DMC/EMC (not limited in mixing ratio)<br>EC/FEC/DMC/EMC (not limited in mixing ratio)<br>PC, DOX |
| | Additive | | FB, MA, VC, $CH_3OH$ |

## FIG.7

Table 1

| No. | Separator | | | | Evaluation | |
|---|---|---|---|---|---|---|
| | Covering layer | | | | Battery resistance /– | Cycle capacity retention /% |
| | Li–ion conductor | | | Thickness /μm | | |
| | Composition | Average particle size /nm | Li–ion conductivity /Scm⁻¹ | | | |
| 1 | – | – | – | 0 | 1.00 | 50.0 |
| 2 | $Li_3PO_4$ | 300 | 1E−07 | 10 | 1.12 | 47.1 |
| 3 | $Li_3PO_4$ | 300 | 2E−09 | 10 | 0.65 | 84.1 |
| 4 | $Li_3PO_4$ | 300 | 1E−10 | 10 | 0.65 | 83.1 |
| 5 | $Li_3PO_4$ | 300 | 1E−11 | 10 | 0.66 | 87.1 |
| 6 | $Li_3PO_4$ | 300 | 1E−12 | 10 | 0.65 | 84.1 |
| 7 | $Li_3PO_4$ | 300 | 1E−13 | 10 | 0.64 | 83.9 |
| 8 | $Li_3PO_4$ | 300 | 1E−14 | 10 | 1.03 | 49.7 |

## FIG.8

Table 2

| No. | Separator | | | | Evaluation | |
|---|---|---|---|---|---|---|
| | Covering layer | | | | Battery resistance /– | Cycle capacity retention /% |
| | Li–ion conductor | | | Thickness /μm | | |
| | Composition | Average particle size /nm | Li–ion conductivity /Scm⁻¹ | | | |
| 1 | – | – | – | 0 | 1.00 | 50.0 |
| 9 | $Li_3PO_4$ | 200 | 2E−09 | 10 | 0.73 | 75.3 |
| 3 | $Li_3PO_4$ | 300 | 2E−09 | 10 | 0.65 | 84.1 |
| 10 | $Li_3PO_4$ | 500 | 2E−09 | 10 | 0.62 | 84.2 |
| 11 | $Li_3PO_4$ | 1000 | 2E−09 | 10 | 0.66 | 84.2 |
| 12 | $Li_3PO_4$ | 1300 | 2E−09 | 10 | 0.68 | 84.1 |
| 13 | $Li_3PO_4$ | 1500 | 2E−09 | 10 | 0.66 | 84.2 |
| 14 | $Li_3PO_4$ | 2000 | 2E−09 | 10 | 0.75 | 77.5 |

FIG.9

Table 3

| No. | Separator | | | | | Evaluation | |
|---|---|---|---|---|---|---|---|
| | Covering layer | | | | | | |
| | Li-ion conductor | | | Thickness /μm | | Battery resistance /- | Cycle capacity retention /% |
| | Composition | Average particle size /nm | Li-ion conductivity /Scm$^{-1}$ | | | | |
| 1 | – | – | – | 0 | | 1.00 | 50.0 |
| 15 | $Li_3PO_4$ | 300 | 2E-09 | 0.4 | | 0.75 | 77.1 |
| 16 | $Li_3PO_4$ | 300 | 2E-09 | 0.5 | | 0.69 | 84.7 |
| 17 | $Li_3PO_4$ | 300 | 2E-09 | 3 | | 0.66 | 85.4 |
| 18 | $Li_3PO_4$ | 300 | 2E-09 | 8 | | 0.63 | 86.1 |
| 3 | $Li_3PO_4$ | 300 | 2E-09 | 10 | | 0.65 | 84.1 |
| 19 | $Li_3PO_4$ | 300 | 2E-09 | 15 | | 0.69 | 83.5 |
| 20 | $Li_3PO_4$ | 300 | 2E-09 | 16 | | 0.78 | 76.4 |

# FIG.10

Table 4

| No. | Separator | | | | Evaluation | |
|---|---|---|---|---|---|---|
| | Covering layer | | | | Battery resistance /- | Cycle capacity retention /% |
| | Li-ion conductor | | | Thickness /μm | | |
| | Composition | Average particle size /nm | Li-ion conductivity /Scm$^{-1}$ | | | |
| 1 | – | – | – | 0 | 1.00 | 50.0 |
| 21 | $Li_{1.3}Al_{0.3}Ti_{1.7}(PO_4)_3$ | 300 | 2E-09 | 10 | 0.64 | 84.7 |
| 22 | $Li_7La_3Zr_2O_{12}$ | 300 | 2E-09 | 10 | 0.63 | 85.4 |
| 23 | $Li_{6.4}La_3Zr_{1.4}Ta_{0.6}O_{12}$ | 300 | 2E-09 | 10 | 0.65 | 86.1 |
| 24 | $Li_{1.07}Al_{0.69}Ti_{1.46}(PO_4)_3$ | 300 | 2E-09 | 10 | 0.64 | 84.1 |
| 25 | $Li_2O-Al_2O_3-SiO_2-P_2O_5-TiO_2$ | 300 | 2E-10 | 10 | 0.65 | 84.1 |
| 26 | $Li_{7-x}La_3(Zr_{2-x}Mg_y)O_{12}$ | 300 | 2E-10 | 10 | 0.66 | 85.3 |
| 27 | $Li_3OCl$ | 300 | 2E-10 | 10 | 0.65 | 85.4 |
| 28 | $Li_{0.29}La_{0.57}TiO_3$ | 300 | 2E-10 | 10 | 0.63 | 84.2 |
| 29 | $Li_{1.5}Al_{0.5}Ge_{1.5}(PO_4)_3$ | 300 | 2E-10 | 10 | 0.66 | 85.4 |
| 30 | $Li_{1-x}Al_xTi_{2-x}(PO_4)_3$ (x=0.3 -0.4) | 300 | 2E-10 | 10 | 0.63 | 85.4 |
| 31 | $Li_{3x}La_{0.66-x}TiO_3$ | 300 | 2E-10 | 10 | 0.65 | 84.2 |
| 32 | $Li_{3x}La_{0.33-x}NbO_3$ | 300 | 2E-10 | 10 | 0.64 | 84.7 |
| 33 | $Li_2SO_4-Li_3BO_3$ | 300 | 2E-10 | 10 | 0.65 | 86.1 |
| 34 | $Li_3BO_4-Li_4SiO_4$ | 300 | 2E-10 | 10 | 0.66 | 84.7 |
| 35 | $Li_3PO_4-Li_3BO_3$ | 300 | 2E-10 | 10 | 0.65 | 85.4 |
| 36 | $50Li_4SiO_4-50Li_3BO_3$ | 300 | 2E-10 | 10 | 0.66 | 85.4 |
| 37 | $Li_{2.9}PO_{3.3}N_{0.46}$ | 300 | 2E-10 | 10 | 0.69 | 85.4 |
| 38 | $Li_{2+2x}Zn_{1-x}GeO_4$ | 300 | 2E-10 | 10 | 0.68 | 83.5 |
| 39 | $Li_{1.5}Al_{0.5}Ge_{1.5}(PO_4)_3$ | 300 | 2E-10 | 10 | 0.64 | 85.4 |
| 40 | $Li_3PO_4-Li_4SiO_4$ | 300 | 2E-10 | 10 | 0.69 | 84.2 |
| 41 | $LiNbO_3$ | 300 | 2E-10 | 10 | 0.64 | 85.3 |
| 42 | $Li_2WO_4$ | 300 | 1E-11 | 10 | 0.69 | 85.4 |
| 43 | $Li_3BO_3$ | 300 | 1E-11 | 10 | 0.68 | 85.4 |
| 44 | $Li_2SO_4$ | 300 | 1E-11 | 10 | 0.67 | 84.1 |

## FIG.11

Table 5

| No. | Separator | | | | Evaluation | |
|---|---|---|---|---|---|---|
| | Covering layer | | | | Battery resistance /– | Cycle capacity retention /% |
| | Li-ion conductor | | | Thickness /μm | | |
| | Composition | Average particle size/nm | Li-ion conductivity /Scm⁻¹ | | | |
| 45 | $Li_2TiO_3$ | 300 | 1E−10 | 10 | 0.66 | 84.7 |
| 46 | $Li_2Ti_2O_5$ | 300 | 1E−10 | 10 | 0.68 | 85.4 |
| 47 | $Li_2SO_3$ | 300 | 1E−10 | 10 | 0.68 | 86.1 |
| 48 | $LiBO_2$ | 300 | 1E−10 | 10 | 0.67 | 84.1 |
| 49 | $Li_2WO_4$ | 300 | 1E−10 | 10 | 0.68 | 83.5 |
| 50 | $Li_2MoO_4$ | 300 | 1E−10 | 10 | 0.68 | 85.4 |
| 51 | $Li_2ZrO_3$ | 300 | 1E−13 | 10 | 0.69 | 85.4 |
| 52 | $LiAlO_2$ | 300 | 1E−13 | 10 | 0.69 | 83.5 |
| 53 | $Li_{10}GeP_2S_{12}$ | 300 | 2E−09 | 10 | 0.63 | 85.4 |
| 54 | $Li_7P_3S_{11}$ | 300 | 2E−09 | 10 | 0.65 | 83.5 |
| 55 | $Li_{3.25}Ge_{0.25}P_{0.75}S_4$ | 300 | 2E−09 | 10 | 0.64 | 83.5 |
| 56 | $30Li_2S-26B_2S_3-44LiI$ | 300 | 2E−09 | 10 | 0.65 | 85.4 |
| 57 | $63Li_2S-36Si_2S_2-1LiI$ | 300 | 2E−09 | 10 | 0.64 | 83.5 |
| 58 | $Li_6PS_5Cl$ | 300 | 2E−09 | 10 | 0.63 | 83.5 |
| 59 | $Li_{3.25}P_{0.95}S_4$ | 300 | 2E−09 | 10 | 0.63 | 84.2 |
| 60 | $57Li_2S-38Si_2S_2-5Li_4SiO_4$ | 300 | 2E−09 | 10 | 0.65 | 83.5 |

FIG.12

FIG.13

300～1500 nm

CYCLE CAPACITY
RETENTION ／％

AVERAGE PARTICLE SIZE ／nm

FIG.14

0.5～15 μm

CYCLE CAPACITY
RETENTION ／%

THICKNESS OF COVERING LAYER／μm

Europäisches
Patentamt

European
Patent Office

Office européen
des brevets

## EUROPEAN SEARCH REPORT

Application Number

EP 24 15 4618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 246 968 A1 (BASF SE [DE]; SION POWER CORP [US]) 22 November 2017 (2017-11-22) * paragraphs [0025], [0028], [0030], [0059], [0063], [0091], [0106], [0149] - [0150] * | 1-6 | INV.<br>H01M10/0525<br>H01M50/46<br>H01M50/474<br>H01M50/491<br>H01M50/497 |
| A | JP 2017 168317 A (TOSHIBA CORP) 21 September 2017 (2017-09-21) * paragraphs [0023], [0035] * | 1-6 | |
| A | EP 3 379 599 A1 (TOSHIBA KK [JP]) 26 September 2018 (2018-09-26) * the whole document * | 1-6 | |

TECHNICAL FIELDS
SEARCHED      (IPC)

H01M

The present search report has been drawn up for all claims

| Place of search | Date of completion of the search | Examiner |
|---|---|---|
| Munich | 26 June 2024 | Lavorenti, Marek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 4618

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| EP 3246968 | A1 | 22-11-2017 | EP | 3246968 A1 | 22-11-2017 |
| | | | EP | 4177982 A1 | 10-05-2023 |
| JP 2017168317 | A | 21-09-2017 | CN | 107204416 A | 26-09-2017 |
| | | | EP | 3220447 A1 | 20-09-2017 |
| | | | JP | 6786231 B2 | 18-11-2020 |
| | | | JP | 2017168317 A | 21-09-2017 |
| | | | KR | 20170107894 A | 26-09-2017 |
| | | | US | 2017271639 A1 | 21-09-2017 |
| EP 3379599 | A1 | 26-09-2018 | CN | 108630988 A | 09-10-2018 |
| | | | EP | 3379599 A1 | 26-09-2018 |
| | | | JP | 6759136 B2 | 23-09-2020 |
| | | | JP | 2018156903 A | 04-10-2018 |
| | | | KR | 20180106810 A | 01-10-2018 |
| | | | US | 2018277896 A1 | 27-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023021506 A

- WO 2021131533 A